(19) Europäisches Patentamt
European Patent Office
Office européen des brevets

(11) **EP 2 607 975 A1**

(12) **EUROPÄISCHE PATENTANMELDUNG**

(43) Veröffentlichungstag:
   **26.06.2013 Patentblatt 2013/26**

(51) Int Cl.:
   **G05B 13/04** (2006.01)

(21) Anmeldenummer: **11195037.4**

(22) Anmeldetag: **21.12.2011**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**

(71) Anmelder: **Siemens Aktiengesellschaft**
   **80333 München (DE)**

(72) Erfinder:
   • **Lohner, Lena, Dr.**
     **76187 Karlsruhe (DE)**
   • **Pfeiffer, Bernd-Markus, Dr.**
     **76744 Wörth (DE)**

(54) **Modellbasierter Prädiktivregler und Verfahren zur Regelung eines technischen Prozesses**

(57)   Es wird ein modellbasierter Prädiktivregler (10) zur Regelung eines technischen Prozesses mittels eines Modells für das dynamische Verhalten des Prozesses mit einer Mehrzahl von Stellgrößen und einer Mehrzahl von Regelgrößen vorgeschlagen. Der Prädiktivregler hat ein erstes Mittel (11) und ein zweites Mittel (12). Das erste Mittel (11) ist zur Bereitstellung eines quadratischen Optimierungsproblems für Stellgrößenänderungen in Form eines quadratischen Gütekriteriums und der zugehörigen Nebenbedingungen in Form einer Ungleichheitsbedingung zwischen einem Produkt aus einer Matrix $\Omega$ zur Zuordnung der Stellgrößenänderungen zu ihren Grenzen und aus einem Vektor $\Delta u$ der Stellgrößenänderungen zu verschiedenen Zeitpunkten innerhalb eines vorbestimmten Steuerhorizontes und einem Vektor $\Theta$ der Grenzen der verschiedenen Stellgrößenänderungen zu den verschiedenen Zeitpunkten eingerichtet. Das zweite Mittel (12) ist zur Umwandlung des quadratischen Optimierungsproblems und seiner Nebenbedingungen in ein lineares Optimierungsproblem mittels zumindest dreier Vektoren $\lambda$, $\nu$, $\rho$ quasi-komplementärer Faktoren eingerichtet.

FIG 1

EP 2 607 975 A1

**Beschreibung**

Die vorliegende Erfindung betrifft einen modellbasierten Prädiktivregler sowie ein Verfahren zur Regelung eines technischen Prozesses.

Modellbasierte Prädiktivregler (MPC) finden immer mehr Einsatz in der Prozessindustrie. Dabei bietet diese Form der Regelung die großen Vorteile, Mehrgrößensysteme handhaben, Störgrößen mit einbeziehen sowie das zukünftige Verhalten der relevanten Größen berücksichtigen zu können. Eine so genannte Online-Optimierung in Verbindung mit einem MPC ist vor allem bei größeren Mehrgrößensystemen wichtig. Sie ermöglicht sowohl die Berücksichtigung von Nebenbedingungen, wie zum Beispiel Begrenzungen für die Stellgrößen bei der Optimierung, als auch das Einbeziehen einer statischen Arbeitspunktoptimierung für alle Systemgrößen, insbesondere auch für nichtquadratische Systeme. Dabei gilt, dass je größer das zu regelnde Mehrgrößensystem ist, desto eher liegt die Lösung des unbegrenzten Optimierungsproblems bezüglich einzelner Stellgrößen temporär außerhalb ihres erlaubten Bereiches und ein nachträgliches "Abschneiden" dieser Lösung auf die Stellgrößenbegrenzungen führt nicht auf die optimale Lösung des Optimierungsproblems mit Nebenbedingungen. Je größer das zu regelnde Mehrgrößensystem ist, desto häufiger stimmt die Zahl der Stellgrößen, insbesondere dauerhaft, nicht mit der Zahl der Regelgrößen überein (nichtquadratische Systeme). Daher ist eine Online-Optimierung für große Mehrgrößenregler von zentraler Bedeutung.

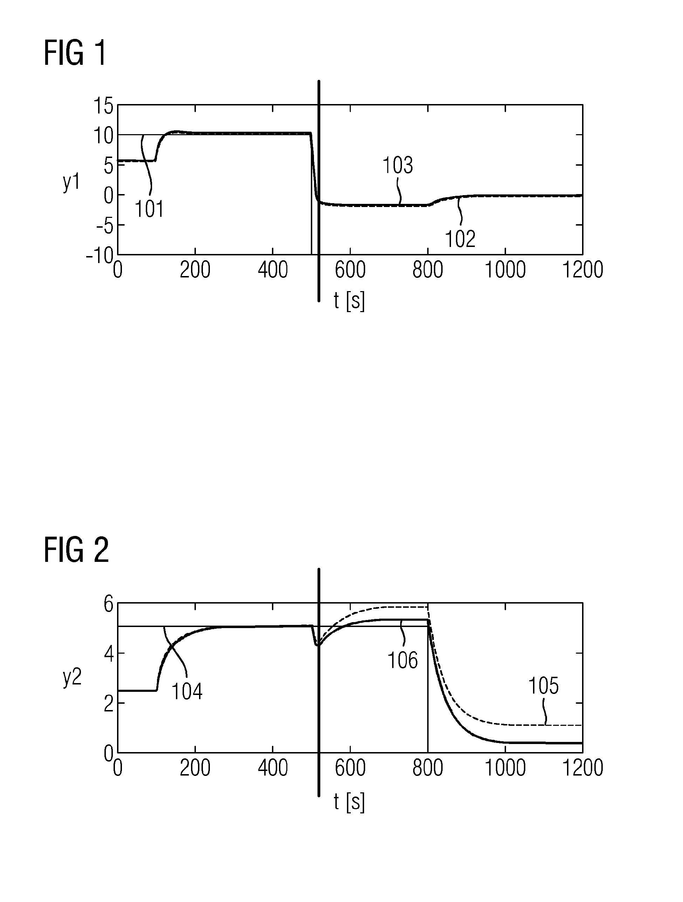

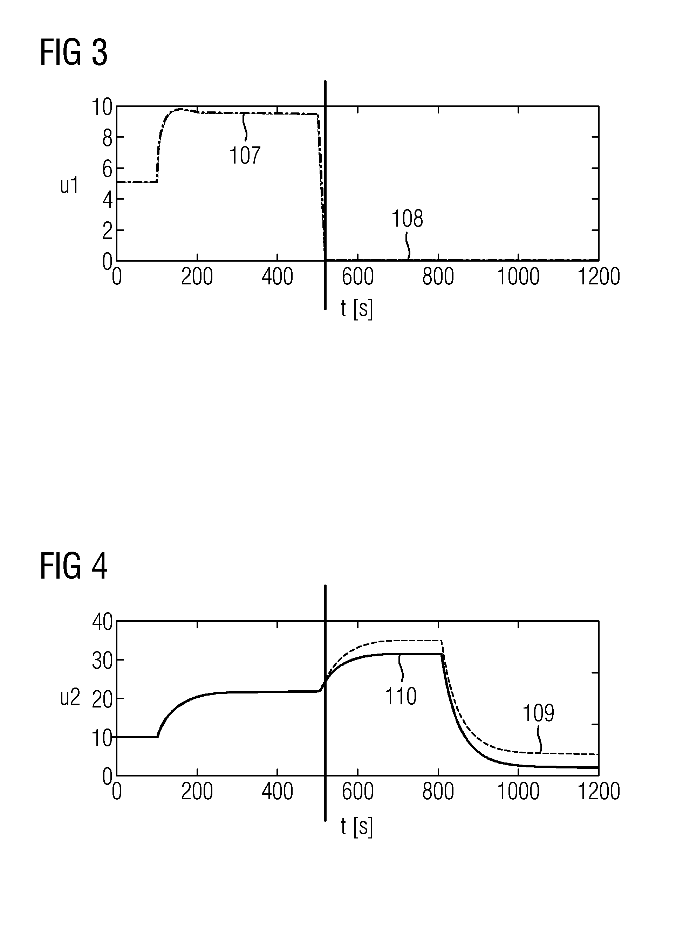

Die Fig. 1 bis 4 zeigen den Vorteil einer Online-Optimierung in einem MPC anhand eines 2x2-Simulationsbeispiels. Die Fig. 1 und 2 zeigen die Verläufe zweier Regelgrößen $y_1$, $y_2$, die Fig. 3 und 4 die der beiden Stellgrößen $u_1$, $u_2$. In den Fig. 1 und 2 zeigt die Kurve 101 bzw. 104 den Verlauf des Sollwerts, die Kurve 102 bzw. 105 den Verlauf ohne Optimierung und die Kurve 103 bzw. 106 den Verlauf mit Optimierung. In den Fig. 3 und 4 zeigt die Kurve 107 bzw. 109 den Verlauf ohne Optimierung und die Kurve 108 bzw. 110 mit Optimierung. Im ersten Teil der Simulation bis ca. 500s sind die Ergebnisse beider MPC identisch, da beide Stellgrößen innerhalb ihres erlaubten Bereiches liegen. Im weiteren Verlauf der Simulation ist die Begrenzung für die erste Stellgröße aktiv. Das Regelergebnis ohne Online-Optimierung (102, 105, 107, 109) zeigt, dass die gewünschten Sollwerte für beide Regelgrößen $y_1$, $y_2$ nur unzureichend erreicht werden können, da die Stellgrößen nicht neu berechnet werden, sondern lediglich durch Abschneiden ein Überschreiten ihrer Grenzen vermieden wird. Der MPC mit Online-Optimierung (103, 106, 108, 110) dagegen berechnet die beste Lösung hinsichtlich aller Regelgrößen $y_1$, $y_2$ und aktiver Grenzen, sodass zumindest der Sollwert der zweiten Regelgröße $y_2$ näherungsweise erreicht werden kann.

Eine dynamische Online-Optimierung und damit eine Berücksichtigung von Nebenbedingungen wie beispielsweise Grenzen für die Stellgrößen sowie eine Arbeitspunktoptimierung für nichtquadratische Systeme sind in vielen herkömmlichen Reglern jedoch nicht verfügbar.

Ferner laufen viele herkömmliche MPC-Regler auf separaten PCs (PC, Personal Computer), die an das Prozessleitsystem angekoppelt werden, und sind daher nicht-prozessnahe Implementierungen mit allen damit verbundenen Nachteilen hinsichtlich Verfügbarkeit, Kosten, Aufwand für Schnittstellen, Überwachungslogik und Backup-Regler.

Im Folgenden wird das Prinzip der Online-Optimierung im MPC näher erläutert. Für Grundlagen zum MPC wird auf [1] und [10] verwiesen.

Dabei wird kurz die Basisberechnung des MPCs in Zustandsraumdarstellung vorgestellt werden. Die Regelstrecke wird durch eine zeitdiskrete Zustandsgleichung der Form $x(k+1)=Ax(k)+Bu(k)$ beschrieben.

Abkürzend soll $x(k)$ den Vektor aus allen Zuständen zum Zeitpunkt k darstellen. Für die Optimierung werden lediglich Begrenzungen der Stellgrößen als Nebenbedingungen betrachtet.

Zunächst muss die Prädiktion über den Prädiktionshorizont *np* betrachtet werden. Die prädizierten Zustände ergeben sich aus dem wiederholten Einsetzen der Zustandsgleichung ineinander zu

$$
\begin{bmatrix} x(k+1) \\ \vdots \\ x(k+nc) \\ \vdots \\ x(k+np) \end{bmatrix} = \begin{bmatrix} A \\ \vdots \\ A^{nc} \\ \vdots \\ A^{np} \end{bmatrix} x(k) + \begin{bmatrix} B \\ \vdots \\ \sum_{i=1}^{nc} A^{nc-i} B \\ \vdots \\ \sum_{i=1}^{np} A^{np-i} B \end{bmatrix} u(k-1) + \begin{bmatrix} B & \cdots & & 0 \\ \sum_{i=1}^{nc} A^{nc-i} B & \ddots & & B \\ & & \ddots & \\ \sum_{i=1}^{np} A^{np-i} & \cdots & \sum_{i=nc}^{np} A^{np-i} B \end{bmatrix} \cdot \begin{bmatrix} \Delta u(k) \\ \vdots \\ \Delta u(k+nc-1) \end{bmatrix}
$$

$$
= f_x x(k) + f_u u(k-1) + \Phi \Delta U = f + \Phi \Delta U
$$

Aus dem zu optimierenden Gütekriterium $J = e^T \mathrm{R}e + \Delta u^T Q \Delta u$, in dem die zukünftigen Abweichungen zwischen Regelgröße und Sollwert $e = y - r$ sowie die zukünftigen Stellgrößenänderungen bestraft werden, ergibt sich das quadratische Optimierungsproblem mit Hesse-Matrix $H$, Gradientenvektor $g$ und Nebenbedingungen für die Stellgrößen, die als Bedingungen für Stellgrößenänderungen formuliert sind, zu $J = \dfrac{1}{2} \Delta u^{\mathrm{T}} H \Delta u + g^{\mathrm{T}} \Delta u$, mit $\Omega \Delta u \geq \ominus$.

Dabei ergeben sich die einzelnen Matrizen und Vektoren zu

$$H = 2\left(\Phi^{T} C^{T} Q C \Phi + R\right), \quad g^{T} = 2\left(Cf - r\right)^{T} QC\Phi, \quad \Omega = \begin{bmatrix} \Omega_1 \\ \Omega_2 \end{bmatrix}, \quad \Theta = \begin{bmatrix} \Theta_1 \\ \Theta_2 \end{bmatrix},$$

$$\text{mit} \quad \Omega_1 = \begin{bmatrix} I_{nu} & \cdots & 0 \\ \vdots & \ddots & \vdots \\ I_{nu} & \cdots & I_{nu} \end{bmatrix}, \quad \Omega_2 = -\Omega_1, \quad \Theta_1 = lb - u(k-1), \quad \Theta_2 = -ub + u(k-1).$$

Darin steht $lb$ für "lower bounds", das heißt Untergrenzen, und $ub$ für "upper bounds", das heißt Obergrenzen für die Absolutwerte der Stellgrößen. Zu beachten ist, dass auch die Matrizen Q, R und C über den Prädiktionshorizont gebildet werden müssen. Die resultierende Stellgrößenänderung ohne Berücksichtigung der Nebenbedingungen ergibt sich zu

$$u(k) = u(k-1) - H^{-1} g(k).$$

Des Weiteren existieren Möglichkeiten zur Erweiterung des Gütemaßes beispielsweise um Vorgabewerte für Stellgrößen.

Ferner werden die Grundlagen der Online-Optimierung kurz zusammengefasst (siehe [6], [1] und [8]).

Die Lösung des Optimierungsproblems lässt sich durch die Lösung eines linearen Gleichungssystems $Ax = b$ finden, wie im Folgenden näher erläutert wird. Da sich sowohl die Matrix A als auch der Vektor b über die Zeit ändern, muss dieses Gleichungssystem in jedem Abtastschritt neu gelöst werden. Zur Lösung muss die Matrix A invertiert werden. Um dies numerisch korrekt und mit möglichst wenig Rechenaufwand bewerkstelligen zu können, gibt es eine Vielzahl von Faktorisierungs- und Zerlegungsalgorithmen.

Das so genannte Block-Eliminations-Verfahren sorgt bereits vor der Faktorisierung für eine reduzierte Ordnung der zu invertierenden Matrix. Dabei wird eine Variable des linearen Gleichungssystems beseitigt, indem die erste "Zeile" des Gleichungssystems nach $x_1$ aufgelöst und in die andere "Zeile" eingesetzt wird. $\begin{bmatrix} A_{11} & A_{12} \\ A_{21} & A_{22} \end{bmatrix} \cdot \begin{bmatrix} x_1 \\ x_2 \end{bmatrix} = \begin{bmatrix} b_1 \\ b_2 \end{bmatrix}$

wird damit reduziert zu

$$\left(A_{22} - A_{21} A_{11}^{-1} A_{12}\right) x_2 = b_2 - A_{21} A_{11}^{-1} b_1.$$

Dabei wird der geklammerte Term als Schur-Komplement der Matrix A bezeichnet.

Um eine günstige Gestalt der zu invertierenden Matrix zu erhalten, gibt es auch das umgekehrte Verfahren, in dem zusätzliche Variablen eingefügt werden.

Es gibt zwei unterschiedliche Ansätze, das Optimierungsproblem mit den Nebenbedingungen zu lösen: Active Set-Methode oder Barrier Interior Point-Methode.

Die Active Set-Methode beruht auf dem Ansatz, dass nur aktive Ungleichheitsbedingungen, das heißt solche, deren Gleichheit momentan erfüllt ist, in der Optimierung berücksichtigt werden. Damit reduzieren sich die Nebenbedingungen in Abhängigkeit der Stellgrößen für den ersten Ansatz zu $F_{1a} u = f_{1a}$.

Da zu Beginn des Optimierungsschrittes diese Gleichung bereits erfüllt ist, dürfen keine Änderungen der Stellgrößen in Bezug auf die aktiven Begrenzungen durchgeführt werden. Daher folgt für die Begrenzung der Stellgrößenänderungen $F_{2a} \Delta u = 0$.

Diese Gleichheitsbedingungen können über Lagrange-Faktoren $\Delta \lambda$ in das Optimierungsproblem aufgenommen werden.

$$J_a(\Delta u) = \frac{1}{2}\Delta u^T H \Delta u + g^T \Delta u + \Delta \lambda \left(F_{2a}\Delta u\right)$$

Aus der Ableitung nach den Stellgrößenänderungen und nach dem Lagrange-Faktor ergeben sich die Optimierungsbedingungen (notwendige Bedingungen für Optimum: Ableitung gleich Null)

$$\frac{\partial J_a}{\partial \Delta u} = H\Delta u + g^T + F_{2a}{}^T \Delta\lambda \overset{!}{=} 0 \quad \text{und} \quad \frac{\partial J_a}{\partial \Delta\lambda} = F_{2a}\Delta u \overset{!}{=} 0 \quad \text{und damit das zu lösen- de lineare Gleichungssystem:}$$

$$\begin{bmatrix} H & F_{2a}{}^T \\ F_{2a} & 0 \end{bmatrix} \cdot \begin{bmatrix} \Delta u \\ \Delta\lambda \end{bmatrix} = \begin{bmatrix} -g^T \\ 0 \end{bmatrix}$$

Bei der Verwendung von Block-Elimination ergibt sich die gesuchte Stellgrößenänderung zu:

$$\Delta\lambda = -\left(F_{2a}H^{-1}F_{2a}{}^T\right)^{-1}F_{2a}H^{-1}g^T$$

$$\Delta u = -H^{-1}\left(g^T + F_{2a}{}^T \Delta\lambda\right)$$

Ist die so gefundene Lösung keine gültige Lösung, so muss über ein Liniensuchverfahren der Faktor zur Rückprojektion auf die Grenzen $u(k + 1) = u(k) + \alpha\Delta u(k)$ gefunden werden, bevor für einen neuen Iterationsschritt die aktiven Nebenbedingungen neu bestimmt werden.

Während die Active Set-Methode Lösungen auf den Grenzen von bereits aktiven Nebenbedingungen sucht, ist der Lösungsraum für die Interior Point-Methode nur innerhalb des erlaubten Gebietes. Dazu wird ein so genannter Barrier-Term eingeführt, welcher für das Erreichen einer Grenze unendlich wird und damit dieses bestraft.

Die vorgestellte QP-Online-Optimierung ist ein sehr aufwändiges Verfahren, welches numerische Matrix-Operationen wie Zerlegungen und Faktorisierungen benötigt, welche insbesondere nicht in der Programmiersprache SCL realisierbar sind, weil die entsprechenden Bibliotheken für numerische Mathematik dort nicht zur Verfügung stehen. Daher kann eine prozessnahe Implementierung mit vertretbarem Aufwand nicht auf Basis dieser Rechenansätze erfolgen.

Emerson hat mit dem DeltaV Predicto Pro einen leitsystemintegrierten 20x20-MPC mit erweiterter Optimierungsfunktionalität auf dem Markt, der auf der Rückführung des QP-Problems auf eine LP-Optimierung sowie der ausschließlichen Betrachtung des stationären Endzustandes am Ende des Prädiktionshorizontes für die Optimierung basiert.

Für die Optimierung (siehe [2]) wird das eigentliche QP-Problem des MPC für einen LP-Optimierer umgeformt. Dazu werden die Grenzen über Schlupfvariablen mit in das Gütekriterium aufgenommen. Diese Schlupfvariablen erhalten nur einen Wert ungleich Null, wenn die zugehörigen Grenzen, auch Sollwertbereiche, verletzt sind. Dabei werden die Begrenzungen nur im Hinblick auf die Summen der Stellgrößenänderungen über den gesamten Prädiktionshorizont und die Regelgrößen im stationären Zustand am Ende des Horizontes betrachtet. Das eigentliche Übergangsverhalten wird nicht direkt betrachtet, sondern geht dabei nur über die Summenbildung ein. Es wird also nur das stationäre Problem am Ende des Prädiktionshorizontes per Optimierung gelöst.

Ein vergleichbarer Ansatz wird in [3] vorgestellt. Dabei bleibt der bekannte MPC ohne Berücksichtigung der Nebenbedingungen in seiner geschlossenen Form bestehen. In das Gütemaß wird eine weitere Komponente hinzugefügt, welche die optimalen stationären Sollwerte für die Stellgrößen berücksichtigt, welche über den oben genannten Endpunkt-Optimierer berechnet werden. Auch für diese Erweiterung kann eine geschlossene Lösung gefunden werden.

Dieses Verfahren erreicht zwar nicht ganz die Leistungsfähigkeit einer echten QP-Lösung des dynamischen Problems, ist aber bei Situationen, in denen mehrere Begrenzungen aktiv sind, schon deutlich besser als der schlanke MPC-Algorithmus, bei dem das Optimierungsproblem ohne Nebenbedingungen gelöst wird und die Lösung anschließend bei den Stellgrößenbegrenzungen "abgeschnitten" wird. Der Rechenaufwand ist noch hinreichend gering, um den Algorithmus in der prozessnahen Komponente des DeltaV-Prozessleitsystems abarbeiten zu können.

Das gesamte Konzept ist in den Druckschriften [5], [11], [12] beschrieben.

Eine Möglichkeit der Rückführung eines quadratischen Problems (QP-Problem) auf ein lineares Problem (LP-Problem) ist von Krabs in [7] beschrieben. Um alle Lösungen, die die Ungleichheitsbedingung erfüllen, also auf der Grenze oder im erlaubten Gebiet liegen, zu erlauben, muss die Ungleichheitsbedingung $\Omega\Delta u \geq \Theta$ zu zwei voneinander abhängigen Gleichheitsbedingungen umformuliert werden. Alle Lösungen auf der Grenze $\Omega\Delta u = \Theta$ sowie alle Lösungen im erlaubten Gebiet $\Omega\Delta u - \lambda = \Theta$, wobei $\lambda$ den Abstand von der Grenze beschreibt, sind gültige Lösungen des Optimierungsproblems. Damit ergeben sich die Optimierungsbedingungen zu

$$H\Delta u + g - \Omega^T v = 0$$

$$v^T\left(\Omega\Delta u - \Theta\right) = 0 \; \textit{für} \; v \neq 0$$

$$\Omega\Delta u - \Theta - \lambda = 0 \; \textit{für} \; v \equiv 0$$

Dabei ist die zweite Bedingung erfüllt, wenn eine Lösung auf einer Grenze liegt, und die dritte, wenn die Lösung innerhalb des Gebietes liegt. Daher sind die beiden Faktoren komplementär zueinander, das heißt, wenn ein Element des ersten Vektors ungleich Null ist, muss das entsprechende Element des zweiten Vektors gleich Null sein und umgekehrt, $v^T \lambda = 0$. Dies lässt sich damit anschaulich erklären, dass die Lösung hinsichtlich einer Begrenzung nur entweder auf der Grenze oder innerhalb des erlaubten Gebietes liegen kann und nicht beides gleichzeitig.

Auflösen der ersten Gleichung nach $\Delta u$ und Einsetzen in die dritte Gleichung (Block-Elimination) führt bei diesen Bedingungen zu

$$\lambda = \Omega H^{-1}\Omega^T v - \Omega H^{-1}g - \Theta$$
$$\Delta u = H^{-1}\Omega^T v - H^{-1}g \qquad .$$

Die erste Gleichung zuzüglich der Komplementaritätsbedingung bildet das zu lösende nichtlineare Gleichungssystem. Dazu wird ein modifiziertes Simplex-Verfahren zur Minimierung des Fehlers verwendet, welches auf folgendem Ansatz für die Lösung beruht
$\lambda = Mv + ez_0 + q$, wobei die Matrix $M$ das Schur-Komplement der Block-Elimination und $q$ den verbleibenden Term der ersten Gleichung der Block-Elimination zusammenfassen $q = \Omega H^{-1}g - \Theta$, e ist ein mit Einsen gefüllter Vektor.

Ziel der Optimierung ist es, den Fehlerterm $z_0$ gegen Null streben zu lassen. Ist die passende Lösung für die komplementären Größen gefunden, so kann die gesuchte Stellgrößenänderung gefunden werden.

Das zu lösende Problem liegt damit in der Form $\lambda = Mv + ez_0 + q$ mit $v^T \lambda = 0$ und $v \geq 0$, $\lambda \geq 0$ vor.

Als Startpunkt wird die Zeile mit dem kleinsten q-Wert ausgewählt. Im Simplex-Verfahren wird daraufhin die s-te Zeile mit $z_0$ vertauscht. Die neuen Zusammenhänge ergeben sich zu

$$z_0 = y_s - q_s - \sum M_{sj}v_j \quad \texttt{mit} \quad \hat{M}^1_{ij} = M_{ij} - M_{sj}, \hat{q}^1_i = q_i - q_s .$$
$$y_i = y_s + \hat{q}^1_i + \sum \hat{M}^1_{ij}v_j$$

Nun wird die nächste Zeile r gesucht, welche mit der s-ten Spalte vertauscht werden kann.

$$\frac{\hat{q}^1_r}{\hat{M}^1_{rs}} = \min\left(\frac{\hat{q}^1_i}{\hat{M}^1_{is}}\middle| \hat{M}^1_{is} > 0\right) = v_r, \quad y_r = 0$$

Nach Vertauschen der beiden Größen können die neuen Einträge folgendermaßen berechnet werden:

$$u_s = \frac{1}{\hat{M}^1_{rs}}\left(y_r - y_s - \hat{q}^1_r - \sum_{j \neq s} \hat{M}^1_{rj}u_j\right)$$

$$y_i = \left[1 - \frac{\hat{M}^1{}_{is}}{\hat{M}^1{}_{rs}}\right]y_s + \frac{\hat{M}^1{}_{is}}{\hat{M}^1{}_{rs}}y_r + \hat{q}^2{}_i + \sum_{j \neq s}\hat{M}^2{}_{ij}u_j$$

$$z_0 = \left[1 + \frac{M_{ss}}{\hat{M}^1{}_{rs}}\right]y_s - \frac{M_{ss}}{\hat{M}^1{}_{rs}}y_r + \hat{q}^2{}_s + \sum_{j \neq s}\hat{M}^2{}_{sj}u_j$$

mit

$$\hat{q}^2{}_i = \hat{q}^1{}_i - \frac{\hat{M}^1{}_{is}}{\hat{M}^1{}_{rs}}\hat{q}^1{}_r$$

$$\hat{q}^2{}_s = -q_s + \frac{M_{ss}}{\hat{M}^1{}_{rs}}\hat{q}^1{}_r$$

$$\hat{M}^2{}_{ij} = \hat{M}^1{}_{ij} - \hat{M}^1{}_{is}\frac{\hat{M}^1{}_{rj}}{\hat{M}^1{}_{rs}}$$

$$\hat{M}^2{}_{sj} = -M_{sj} + M_{ss}\frac{\hat{M}^1{}_{rj}}{\hat{M}^1{}_{rs}}$$

Nun wird die nächste Zeile r gesucht, welche mit der alten r-ten Spalte vertauscht werden kann.

$$\frac{\hat{q}^2{}_r}{\hat{M}^2{}_{rs}} = \min\left(\frac{\hat{q}^2{}_{\hat{r}}}{\hat{M}^2{}_{i\hat{r}}}\left|\hat{M}^2{}_{i\hat{r}} > 0\right.\right) = v_r, \quad y_r = 0$$

Nach Vertauschen der beiden Größen können die neuen Einträge analog zu oben berechnet werden.
Das Verfahren ist beendet, wenn $r==s$ oder alle unbekannten Variablen bekannt sind. Das Verfahren bricht ohne Lösung ab, wenn $\hat{M}^k{}_{ir} \leq 0$ ist.
Es ist daher eine Aufgabe der vorliegenden Erfindung, eine verbesserte Regelung eines technischen Prozesses zu schaffen.
Demgemäß wird ein modellbasierter Prädiktivregler zur Regelung eines technischen Prozesses mittels eines Modells für das dynamische Verhalten des Prozesses mit einer Mehrzahl von Stellgrößen und einer Mehrzahl von Regelgrößen vorgeschlagen. Der Prädiktivregler hat ein erstes Mittel und ein zweites Mittel.
Das erste Mittel ist zur Bereitstellung eines quadratischen Optimierungsproblems für Stellgrößenänderungen in Form eines quadratischen Gütekriteriums und der zugehörigen Nebenbedingungen in Form einer Ungleichheitsbedingung zwischen einem Produkt aus einer Matrix $\Omega$ zur Zuordnung der Stellgrößenänderungen zu ihren Grenzen und aus einem Vektor $\Delta u$ der Stellgrößenänderungen zu verschiedenen Zeitpunkten innerhalb eines vorbestimmten Steuerhorizontes und einem Vektor $\Theta$ der Grenzen der verschiedenen Stellgrößenänderungen zu den verschiedenen Zeitpunkten eingerichtet.
Das zweite Mittel ist zur Umwandlung des quadratischen Optimierungsproblems und seiner Nebenbedingungen in ein lineares Optimierungsproblem mittels zumindest dreier Vektoren $\lambda$, $v$, $\rho$ quasi-komplementärer Faktoren eingerichtet. Die drei Vektoren $\lambda$, $v$, $\rho$ quasi-komplementärer Faktoren umfassen einen ersten Vektor $\lambda$ zur Angabe der Abstände der einzelnen Stellgrößenänderungen zu ihren Grenzen für verschiedene Zeitpunkte des Steuerhorizontes, einen zweiten Vektor $v$ zur Angabe der aktiven unteren Grenzen der verschiedenen Stellgrößenänderungen für die verschiedenen Zeitpunkte und einen dritten Vektor $\rho$ zur Angabe der aktiven oberen Grenzen der einzelnen Stellgrößenänderungen für die verschiedenen Zeitpunkte.

Vorliegend werden drei Vektoren $\lambda$, $v$, $\rho$ quasi-komplementärer Faktoren verwendet, um eine angepasste modifizierte Simplex-Methode anwenden zu können.

Dabei steht $\lambda$ für eine gültige Lösung innerhalb des Gebietes, $v$ für das Aktivsein der unteren Grenze und $\rho$ für das Aktivsein der oberen Grenze.

Damit kann sich das neue lineare Optimierungsproblem zu $\lambda = M\begin{bmatrix} v \\ \rho \end{bmatrix} + ez_0 + q$ mit $v \geq 0$, $\lambda \geq 0$, $\rho \geq 0$ und den Bedingungen $v^T \lambda = 0$, $\rho^T \lambda = 0$, mit $v_i \neq \lambda_i$, $\rho i \neq \lambda_i$ und $v^T \rho = 0$ mit keiner weiteren Einschränkung ergeben. Dabei ist die Gleichheit der zugehörigen Vektorelemente von $v$ und $\rho$ erlaubt, wenn diese identisch Null sind. Diese Eigenschaften der drei Variablen werden als "quasi-komplementär" bezeichnet.

Die Matrix M setzt sich dabei aus viermal derselben Matrix M1 zusammen, welche der ersten Teilmatrix der obigen Matrix M entspricht:

$$M = \begin{bmatrix} M1 & -M1 \\ -M1 & M1 \end{bmatrix}$$

Eine weitere Änderung im Vergleich zum herkömmlichen Algorithmus ist, dass ein $z_0 < 0$ häufig auftaucht. Dies tritt auf für $q > 0$.

Dies bedeutet aber, *dass* $\lambda = M\begin{bmatrix} v \\ \rho \end{bmatrix} + ez_0 + q$ für $z_0 = 0$ eine eindeutige Lösung hat, welche innerhalb des Gebietes liegt, das heißt, $v = 0$ und $\rho = 0$. Dadurch ist $\lambda = q$ und die geschlossene Lösung kann sich aus der Berechnungsformel $u(k) = u(k-1) + H^{-1}\Omega^T v - H^{-1}\Omega^T \rho - H^{-1}g$ ergeben, da die beiden verbleibenden Variablen $v$ und $\rho$ identisch Null sind.

Aufgrund der Einführung einer zusätzlichen Variablen in das Optimierungsproblem wird das eigentliche Lösungsverfahren des modifizierten Simplex-Verfahrens angepasst. Dazu wird auch die oben aus der Literatur übernommene umständliche Schreibweise des Algorithmus geändert. Die neue Schreibweise bezieht sich auf [9].

Das eigentliche Simplex-Verfahren hat zum Ziel, diejenigen Variablen zu finden, welche ungleich Null sind, die so genannten Basisvariablen. Dazu wird das so genannte Pivotelement über eine Maximumsbildung aller Koeffizienten des zu maximierenden Gütemaßes und über eine Minimumsbildung aller Koeffizienten der zugehörigen Spalte gefunden. Die zur Spalte gehörige Variable wird dann zu einer Basisvariable und die Variable der Spalte verliert diesen Status. Die neuen Koeffizienten berechnen sich dann bei einem Pivotelement $p_{rs}$ zu

$$\hat{a}_{ij} = \begin{cases} \dfrac{a_{ij}}{a_{rs}} & \text{für} \quad i = r \\ a_{ij} - a_{is}\hat{a}_{rj} & \text{sonst} \end{cases}.$$

Dieser Vorgang wird so lange durchgeführt, bis die Lösung gefunden ist.

Für die Übertragung auf die vorliegende Problemstellung wird folgender Ansatz getroffen:

$$N\lambda - Mv + M\rho + ez_0 = q .$$

Dabei müssen die Variablen $\lambda$, $v$, $\rho$ größer oder gleich Null sein. Das Ziel des Simplex-Verfahrens ist es, $z_0$ zu Null zu bringen. Als Startpunkt werden alle $\lambda$ als Basisvariablen gewählt. Dies entspricht der Annahme, dass die Lösung sich innerhalb des erlaubten Gebietes befindet. Im ersten Initialisierungsschritt ist diejenige Basisvariable zu finden, welche mit $Z_0$ vertauscht werden kann. Da $Z_0$ für den Fall einer aktiven Begrenzung ungleich Null ist, muss mindestens ein $\lambda$ gleich Null sein. Diese Startzeile ergibt sich aus $\min_i q_i = q_s$ . Die neuen Koeffizienten berechnen sich nun zu

$$\hat{n}_{si} = -n_{si}, \quad \hat{n}_{ji} = n_{ji} + \hat{n}_{si}$$

$$\hat{m}_{si} = m_{si}, \quad \hat{m}_{ji} = m_{ji} + \hat{m}_{si}$$

$$\hat{q}_s = -q_s, \quad \hat{q}_j = q_j + q_s$$

Alle weiteren Pivotelemente ergeben sich aus

$$\max_{r_{l-2},\bar{r}_{l-2}}\left(\hat{m}_{si}^{l-1}\right) = \hat{m}_{sr}^{l-1}, \quad \min_j\left(\frac{\hat{q}_j^{l-1}}{\hat{m}_{jr_{l-2}}^{l-1}}\left|\hat{m}_{jr_{l-2}}^{l-1} > 0\right.\right) \to r_{l-1}$$ . Das Verfahren terminiert, wenn $r_{l-1} \equiv s$. Dann wird nur noch einmal getauscht und die neuen Koeffizienten werden berechnet.

Die Unterschiede dieses modifizierten Simplex-Verfahrens zu demjenigen nach Krabs sind die Einbindung einer dritten Variable (hier: p), die Einbindung einer Maximumsbildung und die Handhabung einer besonderen Struktur des Schur-Komplements M. Ferner kann damit Rechenzeit eingespart werden und es ist sichergestellt, dass stets eine Lösung gefunden wird. Der Unterschied zum Standardverfahren liegt im Wegfall der separaten Kostengleichungen, in einer veränderten Berechnung der einzelnen Elemente (vergleiche $a$ zu $n, m, q$) sowie in der abgewandelten Berechnung des Startelements.

Erfindungsgemäß wird damit eine Online-Optimierung für einen modellbasierten Prädiktivregler bereitgestellt, um eine geringe Rechenbelastung, eine prozessnahe Implementierung, eine Berücksichtigung von Nebenbedingungen für die Stellgrößen bei der Optimierung und eine Integration einer statischen Arbeitspunktoptimierung für alle Systemgrößen zu gewährleisten.

Um eine statische Arbeitspunktoptimierung für alle Systemgrößen zu ermöglichen, wird das eigentliche Gütemaß des MPCs erweitert. Das erweiterte Gütemaß wird mit Berücksichtigung der Nebenbedingungen und der oben genannten Randbedingungen gelöst.

Bei einer ersten Ausführungsform stellt das erste Mittel die Ungleichheitsbedingung als $\Omega\Delta u \geq \Theta$ bereit. Dabei bezeichnen $\Omega$ die Matrix zur Zuordnung der Stellgrößenänderungen zu ihren Grenzen, $\Delta u$ den Vektor der Stellgrößenänderungen zu verschiedenen Zeitpunkten innerhalb des Steuerhorizontes und $\Theta$ den Vektor der Grenzen der verschiedenen Stellgrößenänderungen zu den verschiedenen Zeitpunkten.

Bei einer weiteren Ausführungsform wandelt das zweite Mittel die Ungleichheitsbedingung $\Omega\Delta u \geq \Theta$ und das quadratische Optimierungsproblem mittels einer Block-Elimination und unter Verwendung der drei Vektoren ($\lambda, \nu, \rho$) quasi-komplementärer

Faktoren in $\lambda = M\begin{bmatrix} \nu \\ \rho \end{bmatrix} + ez_0 + q$ , mit $\nu \geq 0$, $\lambda \geq 0$, $\rho \geq 0$, und den Bedingungen $\nu^T \lambda = 0$, $\rho^T \lambda = 0$, mit $\nu_i \neq \lambda_i$, $\rho_i \neq \lambda_i$, und $\nu^T \rho = 0$. Dabei bezeichnen M das Schur-Komplement der Block-Elimination, e einen mit Einsen gefüllten Vektor, $z_0$ den zu minimierenden Fehler des linearen Optimierungsproblems und q den verbleibenden Term der Block-Elimination, der nicht in dem Schur-Komplement M enthalten ist.

Bei einer weiteren Ausführungsform ist das zweite Mittel dazu eingerichtet, das Schur-Komplement M aus viermal derselben Matrix M1 zusammenzusetzen, mit $M = \begin{bmatrix} M1 & -M1 \\ -M1 & M1 \end{bmatrix}$.

Bei einer weiteren Ausführungsform ist ein drittes Mittel vorgesehen, welches dazu eingerichtet ist, das lineare Optimierungsproblem $\lambda = M\begin{bmatrix} \nu \\ \rho \end{bmatrix} + ez_0 + q$ mittels eines modifizierten Simplex-Verfahrens zu lösen.

Bei einer weiteren Ausführungsform ist das dritte Mittel dazu eingerichtet, für das lineare Optimierungsproblem $\lambda = M\begin{bmatrix} \nu \\ \rho \end{bmatrix} + ez_0 + q$ einen Ansatz $N\lambda - M\nu + M\rho + ez_0 = q$ zu treffen, wobei N eine Gewichtungsmatrix für $\lambda$ bezeichnet, und $z_0$ des getroffenen Ansatzes zur Lösung des linearen Optimierungsproblems zu minimieren.

Bei einer weiteren Ausführungsform ist das dritte Mittel dazu eingerichtet, $z_0$ des getroffenen Ansatzes mittels des modifizierten Simplex-Verfahrens auf Null zu bringen.

Bei einer weiteren Ausführungsform ist das dritte Mittel dazu eingerichtet, zur Lösung des Ansatzes mit

$$M = \begin{bmatrix} M1 & -M1 \\ -M1 & M1 \end{bmatrix}$$ als Startparameter alle $\lambda$ als Basisvariablen zu wählen.

Mit dem vorliegenden Ansatz zur Lösung des Optimierungsproblems kann Rechenzeit eingespart werden. Dies gilt insbesondere auch dann, wenn der vorgeschlagene modellbasierte Prädiktivregler in einer speicherprogrammierbaren Steuerung (SPS) eingesetzt wird.

Prinzipiell ist es in einer SPS-Umgebung das Ziel, die Spitzenlast bezüglich Rechenleistung zu reduzieren, nicht aber die über die Summe der Zeit entstehende Gesamtlast, da die CPU (CPU, Central Processing Unit) die Spitzenlast verarbeiten können muss. Die meisten Funktionen in einer CPU laufen in einem festen Zyklus. Wenn eine einzelne Funktion, wie zum Beispiel der MPC, einen stark schwankenden Bedarf an Rechenzeit hat, ist die CPU vorzugsweise so auszulegen, dass auch bei maximalem Bedarf dieser einen Funktion der Zyklus nicht überlastet wird und die anderen Funktionen der CPU noch zu ihrem Recht kommen. Im Gegensatz zu einer typischen Windows-Umgebung auf einem PC gibt es in einer SPS keine große Zahl von Funktionen, die niederprior und ohne festen Zeittakt abgearbeitet werden können, um Lücken in der Rechenzeitbelastung zu füllen.

Dabei ist das dritte Mittel vorzugsweise dazu eingerichtet, die Komplexität des Ansatzes durch Entfernen aller Zeitpunkte ohne aktive Grenzen mit $\nu \neq 0$ und $\rho \neq 0$ zu reduzieren.

Die Komplexität des Optimierungsverfahrens kann demnach reduziert werden, wenn nur diejenigen Zeitpunkte betrachtet werden, zu denen mindestens eine Grenze verletzt ist. Zusätzlich können zu den Zeitpunkten mit aktiven Grenzen alle irrelevanten Grenzen entfernt werden, wenn keine Stellgröße diese im betrachteten Zeitpunkt verletzt oder womöglich verletzen wird. Dadurch wird vorteilhafterweise erzielt, dass teilweise keine Maximumsbildung mehr nötig ist. Somit ergibt sich für den Fall, dass mindestens eine Grenze verletzt ist ($q_0 < 0$), ein rekursiver Algorithmus mit den Schritten a) bis d) der Form:

a) nicht aktive Zeitpunkte, das heißt, Zeitpunkte ohne aktive Grenzen und weitere irrelevante Grenzen entfernen;
b) Optimierung des reduzierten Systems;
c) neue q-Werte berechnen;

$$q(k+1) = q(k) + \begin{bmatrix} M\nu - M\rho \\ -M\nu + M\rho \end{bmatrix}$$

d) sind die Grenzen nun eingehalten, ist die aktuelle Lösung das gesuchte Ergebnis. Anderenfalls wird der Algorithmus beim ersten Punkt mit neuen q-Werten begonnen.

Die Gesamtlösung für $\nu$ und $\rho$ ergibt sich aus der Summe der Lösungen der einzelnen Iterationsschritte.

Bei einer weiteren Ausführungsform ist das dritte Mittel dazu eingerichtet, die neuen q-Werte des reduzierten Ansatzes durch $q(k+1) = q(k) + \begin{bmatrix} M\nu - M\rho \\ -M\nu + M\rho \end{bmatrix}$ zu berechnen.

Das jeweilige Mittel, beispielsweise das erste Mittel, das zweite Mittel oder das dritte Mittel, kann hardwaretechnisch oder auch softwaretechnisch implementiert sein. Bei einer hardwaretechnischen Implementierung kann das jeweilige Mittel als Vorrichtung oder als Teil einer Vorrichtung, zum Beispiel als Computer oder als Microprozessor oder als IC, ASIC oder FPGA, ausgebildet sein. Bei einer softwaretechnischen Implementierung kann das jeweilige Mittel als Computerprogramm-Produkt, als eine Funktion, als eine Routine, als Teil eines Programmcodes oder als ausführbares Objekt ausgebildet sein.

Ferner wird eine speicherprogrammierbare Steuerung (SPS) mit einem wie oben beschriebenen modellbasierten Prädiktivregler vorgeschlagen.

Des Weiteren wird ein Verfahren zur Regelung eines technischen Prozesses mittels eines Modells für das dynamische Verhalten des Prozesses mit einer Mehrzahl von Stellgrößen und einer Mehrzahl von Regelgrößen vorgeschlagen. Dabei werden ein quadratisches Optimierungsproblem für Stellgrößenänderungen in Form eines quadratischen Gütekriteriums und die zugehörigen Nebenbedingungen in Form einer Ungleichheitsbedingung zwischen einem Produkt aus einer Matrix $\Omega$ zur Zuordnung der Stellgrößenänderungen zu ihren Grenzen und aus einem Vektor $\Delta u$ der Stellgrößenänderungen zu verschiedenen Zeitpunkten innerhalb eines vorbestimmten Steuerhorizontes und einem Vektor $\Theta$ der Grenzen der verschiedenen Stellgrößenänderungen zu den verschiedenen Zeitpunkten bereitgestellt. Ferner werden das quadratische Optimierungsproblem und die zugehörigen Nebenbedingungen in ein lineares Optimierungsproblem mittels zumindest dreier Vektoren $\lambda$, $\nu$, $\rho$ quasi-komplementärer Faktoren umgewandelt. Dabei weisen die drei Vektoren $\lambda$, $\nu$, $\rho$ quasi-komplementärer Faktoren einen ersten Vektor $\lambda$ zur Angabe der Abstände der einzelnen Stellgrößenänderungen zu ihren Grenzen für verschiedene Zeitpunkte des Steuerhorizontes, einen zweiten Vektor $\nu$ zur Angabe der aktiven unteren Grenzen der verschiedenen Stellgrößenänderungen für die verschiedenen Zeitpunkte und einen dritten Vektor $\rho$ zur Angabe der aktiven oberen Grenzen der einzelnen Stellgrößenänderungen für die verschiedenen Zeitpunkte auf.

Weiterhin wird ein Computerprogramm-Produkt vorgeschlagen, welches auf einer programmgesteuerten Einrichtung die Durchführung des wie oben erläuterten Verfahrens zur Regelung eines technischen Prozesses mittels eines Modells für das dynamische Verhalten des Prozesses veranlasst.

Ein Computerprogramm-Produkt wie ein Computerprogramm-Mittel kann beispielsweise als Speichermedium, wie Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Ferner wird ein Datenträger mit einem gespeicherten Computerprogramm mit Befehlen vorgeschlagen, welche die Durchführung des wie oben beschriebenen Verfahrens zur Regelung eines technischen Prozesses mittels eines Modells für das dynamische Verhalten des Prozesses auf einer programmgesteuerten Einrichtung veranlassen.

Es ist denkbar, den vorliegenden Algorithmus durch zusätzliche Maßnahmen zur Einsparung von Rechenzeit zu erweitern.

Ferner ist es denkbar, als Abbruchkriterium eine vorbestimmte maximale Anzahl von Iterationen hinzuzufügen. Des Weiteren werden aktive Grenzen insbesondere nicht mit berücksichtigt, wenn vorab deren Lösung für den gesamten Steuerhorizont bekannt ist.

Im Folgenden sollen Unterschiede aus Sicht des eigenen Verfahrens zu den bereits existierenden Verfahren zusammengefasst werden.

Im Gegensatz zum Konzept von Emerson wird nicht nur der stationäre Zustand am Ende des Prädiktionshorizontes optimiert, sondern erfindungsgemäß wird der gesamte Prädiktionshorizont betrachtet. Außerdem wird ein anderer Ansatz zur Rückführung des quadratischen Optimierungsproblems auf ein lineares Problem sowie ein anderes Optimierungsverfahren verwendet.

Im Gegensatz zur bekannten Active Set-Methode werden erfindungsgemäß auch Zeitpunkte als Zeilen im Gleichungssystem vollständig weggelassen, wohingegen bei der Active Set-Methode nur einzelne Grenzen für den gesamten Steuerhorizont weggelassen werden. Ferner werden teilweise auch inaktive Grenzen berücksichtigt, wenn zu diesem Zeitpunkt andere Grenzen aktiv sind. Damit werden überflüssige Iterationsschleifen vorteilhafterweise vermieden, wenn bei der herkömmlichen Active Set-Methode zunächst keine gültige Lösung gefunden werden kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:

Fig. 1-4       eine Online-Optimierung in einem MPC anhand eines 2x2-Simulationsbeispiels;

Fig. 5       ein Blockschaltbild eines ersten Ausführungsbeispiels eines modellbasierten Prädiktivreglers;

Fig. 6       ein Blockschaltbild eines zweiten Ausführungsbeispiels eines modellbasierten Prädiktivreglers;

Fig. 7       ein Ablaufdiagramm eines Ausführungsbeispiels eines Verfahrens zur Regelung eines technischen Prozesses mittels eines Modells für das dynamische Verhalten des Prozesses;

Fig. 8-11       das Verhalten von zwei Regelgrößen bei höherer Priorität auf der zweiten Regelgröße und

Fig. 12-15       das Verhalten der zwei Regelgrößen bei höherer Priorität auf der ersten Regelgröße.

In den Figuren sind gleiche oder funktionsgleiche Elemente mit denselben Bezugszeichen versehen worden, sofern nichts anderes angegeben ist.

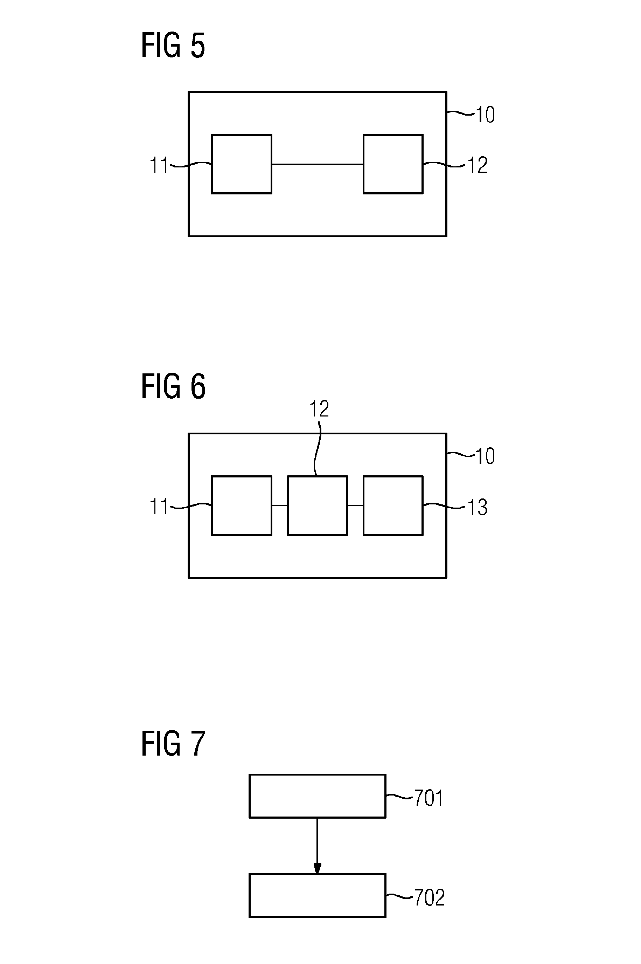

In Fig. 5 ist ein Blockschaltbild eines ersten Ausführungsbeispiels eines modellbasierten Prädiktivreglers 10 dargestellt.

Der Prädiktivregler 10 ist zur Regelung eines technischen Prozesses mittels eines Modells für das dynamische Verhalten des Prozesses mit einer Mehrzahl von Stellgrößen und einer Mehrzahl von Regelgrößen geeignet. Der Prädiktivregler 10 hat ein erstes Mittel 11 und ein zweites Mittel 12.

Das erste Mittel 11 ist zur Bereitstellung eines quadratischen Optimierungsproblems für Stellgrößenänderungen in Form eines quadratischen Gütekriteriums und der zugehörigen Nebenbedingungen in Form einer Ungleichheitsbedingung zwischen einem Produkt aus einer Matrix $\Omega$ zur Zuordnung der Stellgrößenänderungen zu ihren Grenzen und aus einem Vektor $\Delta u$ der Stellgrößenänderungen zu verschiedenen Zeitpunkten innerhalb eines vorbestimmten Steuerhorizontes und einem Vektor $\Theta$ der Grenzen der verschiedenen Stellgrößenänderungen zu den verschiedenen Zeitpunkten eingerichtet.

Das zweite Mittel 12 ist zur Umwandlung des quadratischen Optimierungsproblems und seiner Nebenbedingungen in ein lineares Optimierungsproblem mittels zumindest dreier Vektoren $\lambda$, $\nu$, $\rho$ quasi-komplementärer Faktoren eingerichtet. Die drei Vektoren $\lambda$, $\nu$, $\rho$ quasi-komplementärer Faktoren umfassen einen ersten Vektor $\lambda$ zur Angabe der Abstände der einzelnen Stellgrößenänderungen zu ihren Grenzen für verschiedene Zeitpunkte des Steuerhorizontes, einen zweiten Vektor $\nu$ zur Angabe der aktiven unteren Grenzen der verschiedenen Stellgrößenänderungen für die verschiedenen Zeitpunkte und einen dritten Vektor $\rho$ zur Angabe der aktiven oberen Grenzen der einzelnen Stellgrößenänderungen für die verschiedenen Zeitpunkte.

Insbesondere stellt das erste Mittel 11 die Ungleichheitsbedingung als $\Omega\Delta u \geq \Theta$ bereit. Dabei bezeichnen $\Omega$ die Matrix zur Zuordnung der Stellgrößenänderungen zu ihren Grenzen, $\Delta u$ den Vektor der Stellgrößenänderungen zu verschiedenen Zeitpunkten innerhalb des Steuerhorizontes und $\Theta$ den Vektor der Grenzen der verschiedenen Stellgrößenänderungen zu den verschiedenen Zeitpunkten.

Das zweite Mittel kann dann dazu eingerichtet werden, die Ungleichheitsbedingung $\Omega\Delta u \geq \Theta$ und das quadratische Optimierungsproblem mittels Block-Elimination und unter Verwendung der drei Vektoren $(\lambda, \nu, \rho)$ quasi-komplementärer Faktoren in $\lambda = M\begin{bmatrix} \nu \\ \rho \end{bmatrix} + ez_0 + q$, mit $\nu \geq 0$, $\lambda \geq 0$, $\rho \geq 0$, und den Bedingungen $\nu^T\lambda = 0$, $\rho^T\lambda = 0$, mit $\nu_i \neq \lambda_i$, $\rho_i \neq \lambda_i$, und $\nu^T\rho = 0$ zu wandeln. Dabei bezeichnen M das Schur-Komplement der Block-Elimination, e einen mit Einsen gefüllten Vektor, $z_0$ den zu minimierenden Fehler des linearen Optimierungsproblems und q den verbleibenden Term der Block-Elimination, der nicht im Schur-Komplement M enthalten ist.

Vorzugsweise setzt das zweite Mittel 12 das Schur-Komplement M aus viermal derselben Matrix M1 zusammen, mit

$$M = \begin{bmatrix} M1 & -M1 \\ -M1 & M1 \end{bmatrix}.$$

Fig. 6 zeigt ein Blockschaltbild eines zweiten Ausführungsbeispiels eines modellbasierten Prädiktivreglers 10. Der Prädiktivregler 10 der Fig. 6 basiert auf dem Prädiktivregler 10 der Fig. 5 und weist sämtliche Merkmale der Fig. 5 auf. Darüber hinaus hat der Prädiktivregler 10 ein drittes Mittel 13.

Das dritte Mittel 13 ist dazu eingerichtet, das lineare Optimierungsproblem $\lambda = M\begin{bmatrix} \nu \\ \rho \end{bmatrix} + ez_0 + q$ mittels eines modifizierten Simplex-Verfahrens zu lösen.

Dabei kann das dritte Mittel 13 für das lineare Optimierungsproblem $\lambda = M\begin{bmatrix} \nu \\ \rho \end{bmatrix} + ez_0 + q$ einen Ansatz $N\lambda - M\nu + M\rho + ez_0 = q$ treffen, um $z_0$ des getroffenen Ansatzes zur Lösung des linearen Optimierungsproblems zu minimieren. Hierbei bezeichnet N eine Gewichtungsmatrix für $\lambda$.

Ferner kann das dritte Mittel 13 dazu eingerichtet werden, zur Lösung des Ansatzes $M = \begin{bmatrix} M1 & -M1 \\ -M1 & M1 \end{bmatrix}$ als Startparameter alle $\lambda$ als Basisvariablen zu wählen.

Das dritte Mittel reduziert vorzugsweise die Komplexität des Ansatzes durch Entfernen aller Zeitpunkte ohne aktive Grenzen mit $\nu \neq 0$ und $\rho \neq 0$. Die neuen q-Werte des reduzierten Ansatzes werden dann durch

$$q(k+1) = q(k) + \begin{bmatrix} M\nu - M\rho \\ -M\nu + M\rho \end{bmatrix}$$ berechnet.

In Fig. 7 ist ein Ablaufdiagramm eines Ausführungsbeispiels eines Verfahrens zur Regelung eines technischen Prozesses mittels eines Modells für das dynamische Verhalten des Prozesses mit einer Mehrzahl von Stellgrößen und einer Mehrzahl von Regelgrößen dargestellt.

In Schritt 701 werden ein quadratisches Optimierungsproblem für Stellgrößenänderungen in Form eines quadratischen Gütekriteriums und die zugehörigen Nebenbedingungen in Form einer Ungleichheitsbedingung zwischen einem Produkt aus einer Matrix $\Omega$ zur Zuordnung der Stellgrößenänderungen zu ihren Grenzen und aus einem Vektor $\Delta u$ der Stellgrößenänderungen zu verschiedenen Zeitpunkten innerhalb eines vorbestimmten Steuerhorizontes und einem Vektor $\Theta$ der Grenzen der verschiedenen Stellgrößenänderungen zu den verschiedenen Zeitpunkten bereitgestellt.

In Schritt 702 werden das quadratische Optimierungsproblem und die zugehörigen Nebenbedingungen in ein lineares Optimierungsproblem mittels zumindest dreier Vektoren $\lambda$, $\nu$, $\rho$ quasi-komplementärer Faktoren umgewandelt. Dabei weisen die drei Vektoren $\lambda$, $\nu$, $\rho$ quasi-komplementärer Faktoren einen ersten Vektor $\lambda$ zur Angabe der Abstände der einzelnen Stellgrößenänderungen zu ihren Grenzen für verschiedene Zeitpunkte des Steuerhorizontes, einen zweiten Vektor $\nu$ zur Angabe der aktiven unteren Grenzen der verschiedenen Stellgrößenänderungen für die verschiedenen Zeitpunkte und einen dritten Vektor $\rho$ zur Angabe der aktiven oberen Grenzen der einzelnen Stellgrößenänderungen für die verschiedenen Zeitpunkte auf.

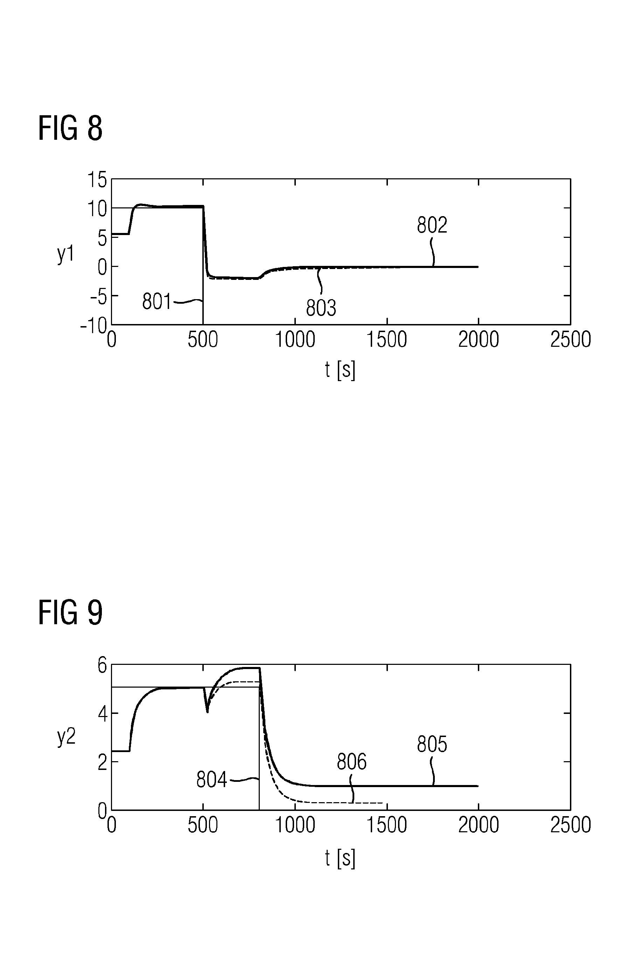

Basierend auf MATLAB Simulink ist ein beispielhaftes, vereinfachtes Testszenario durchgeführt worden, um das Verhalten des MPC auf Basis der Zustandsraumdarstellung mit und ohne das vorgeschlagene Optimierungsverfahren zu vergleichen. Die Ergebnisse des Testszenarios sind im Folgenden mit Bezug zu den Fig. 8 bis 11 sowie Fig. 12 bis 15 dargestellt.

Im Detail zeigen die Fig. 8 und 9 das Verhalten der Regelgröße $y_1$ (Fig. 8), $y_2$ (Fig. 9) bei höherer Priorität auf der zweiten Regelgröße $y_2$. Dabei zeigt in Fig. 8 die Kurve 801 den Sollwert der ersten Regelgröße $y_1$, wobei die Kurve 802 den Istwert der ersten Regelgröße $y_1$ ohne Optimierung und die Kurve 803 den Istwert der ersten Regelgröße $y_1$ mit Optimierung zeigt.

In Fig. 9 zeigt die Kurve 804 den Sollwert der zweiten Regelgröße $y_2$, die Kurve 805 den Istwert der zweiten Regelgröße $y_2$ ohne Optimierung und die Kurve 806 den Istwert der zweiten Regelgröße $y_2$ mit Optimierung.

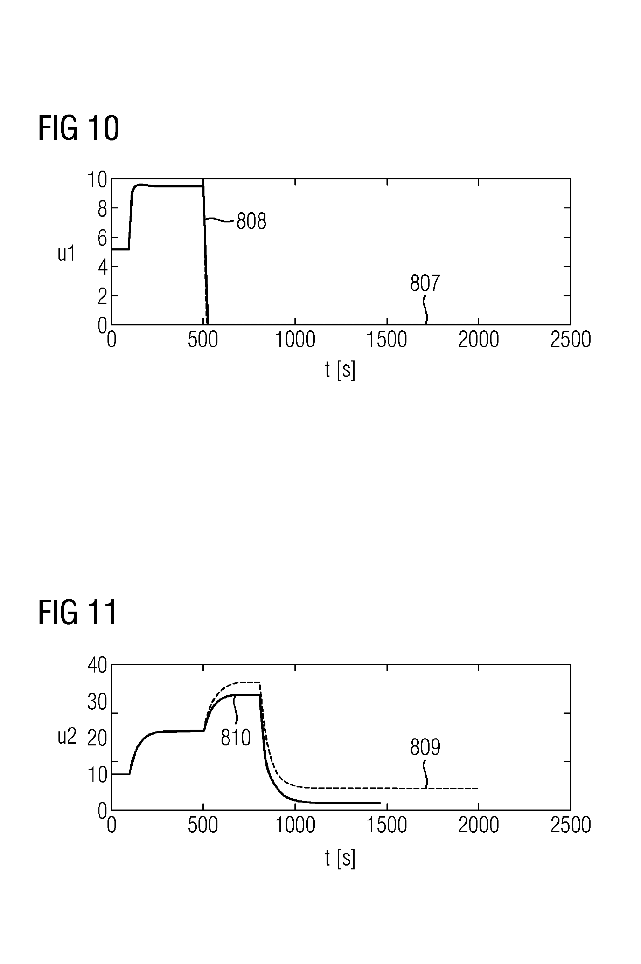

Die Fig. 10 und 11 zeigen das Verhalten der zugehörigen Stellgrößen $u_1$ (Fig. 10), $u_2$ (Fig. 11) bei einer höheren Priorität auf der zweiten Regelgröße $y_2$. In Fig. 10 zeigt die Kurve 807 die erste Stellgröße $u_1$ ohne Optimierung und die Kurve 808 die erste Stellgröße $u_1$ mit Optimierung.

Entsprechend zeigt in Fig. 11 die Kurve 809 die zweite Stellgröße $u_2$ ohne Optimierung und die Kurve 810 die zweite Stellgröße $u_2$ mit Optimierung.

Dabei läuft das System bei ca. 500s in eine Begrenzung und hat dennoch anschließend einen weiteren Sollwertsprung zu verarbeiten. In den Fig. 8 bis 11 ist deutlich zu erkennen, dass die zweite Regelgröße $y_2$ wesentlich näher an ihre Sollwerte herangeführt werden kann, wenn die Optimierung verwendet wird.

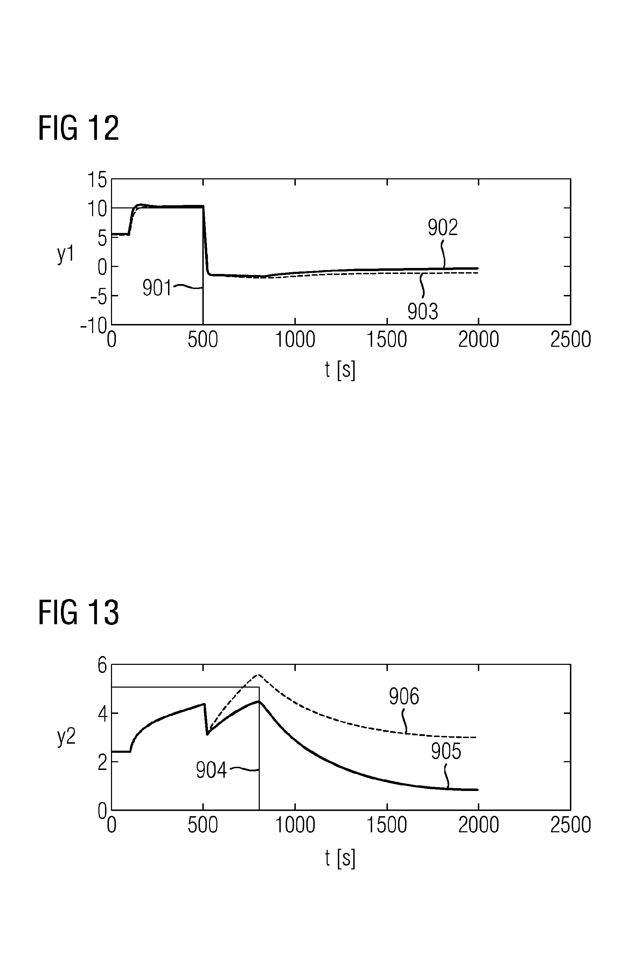

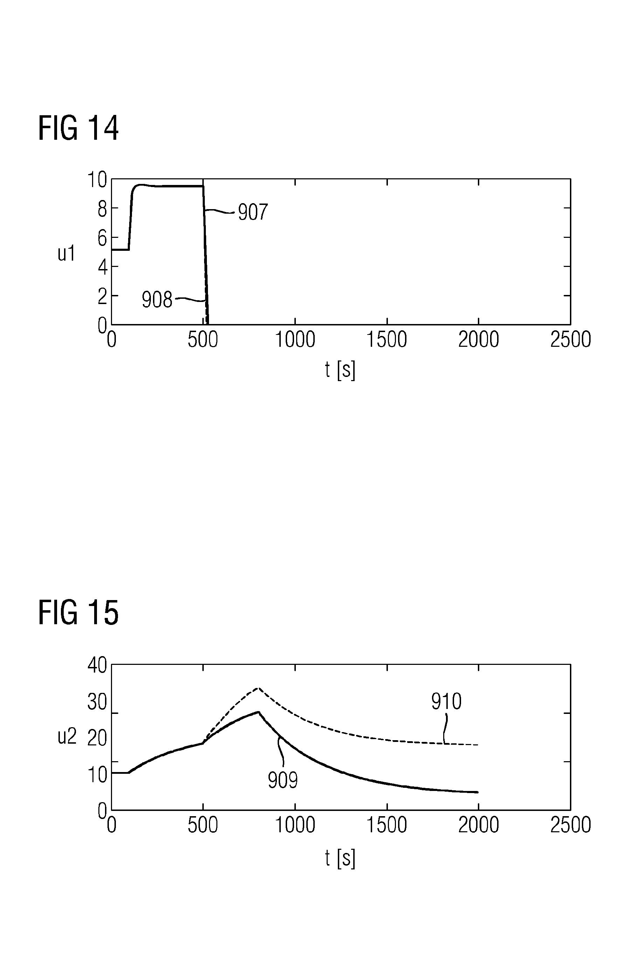

Ferner zeigen die Fig. 12 und 13 das Verhalten der Regelgrößen $y_1$, $y_2$ bei einer deutlich höheren Priorität der ersten Regelgröße $y_1$. Entsprechend zeigen die Fig. 14 und 15 das Verhalten der zugeordneten Stellgrößen $u_1$, $u_2$ bei der höheren Priorität der ersten Regelgröße $y_1$.

Dabei zeigt in Fig. 12 die Kurve 901 den Sollwert der ersten Regelgröße $y_1$, wobei die Kurve 902 den Istwert der ersten Regelgröße $y_1$ ohne Optimierung und die Kurve 903 den Istwert der ersten Regelgröße $y_1$ mit Optimierung zeigt.

In Fig. 13 zeigt die Kurve 904 den Sollwert der zweiten Regelgröße $y_2$, die Kurve 905 den Istwert der zweiten Regelgröße $y_2$ ohne Optimierung und die Kurve 906 den Istwert der zweiten Regelgröße $y_2$ mit Optimierung.

In Fig. 14 zeigt die Kurve 907 die erste Stellgröße $u_1$ ohne Optimierung und die Kurve 908 die erste Stellgröße $u_1$ mit Optimierung.

Entsprechend zeigt in Fig. 15 die Kurve 909 die zweite Stellgröße $u_2$ ohne Optimierung und die Kurve 910 die zweite Stellgröße $u_2$ mit Optimierung.

Wird, wie in den Fig. 12 bis 15 gezeigt, die Priorität auf die erste Regelgröße $y_1$ gelegt, so zeigt auch hier die Optimierung das gewünschte Verhalten. Das Ziel, die erste Regelgröße $y_1$ gegen ihren Sollwert zu führen, ist nun wesentlich wichtiger als die zweite Regelgröße, sodass Fehler bei der zweiten Regelgröße $y_2$ leichter in Kauf genommen werden können.

Für einen Vergleich der Rechenzeiten wurde das zuvor vorgestellte Szenario der Fig. 8 bis 11, 12 bis 15 mehrmals simuliert und der Mittelwert der Simulationszeiten als tatsächliche Zeit in folgender Tabelle aufgeführt.

Für verschiedene Modelle, Größenordnungen und Konstellationen der Begrenzungen können manche Methoden für bestimmte Anwendungen besser geeignet sein. Zu dem oben genannten Verfahren zur Reduktion der Komplexität des linearen Optimierungsproblems wurde teilweise zusätzlich eine Manipulation des Stellhorizontes zur Reduktion des Rechenaufwandes herangezogen. Dabei wird nur zu jedem 2., 4., 8., 16., etc. Zeitpunkt eine Änderung der Stellgröße zugelassen.

Zunächst wurde ein System mit zwei Stell- und Regelgrößen simuliert. Dabei ist ab etwa t=500s eine Begrenzung aktiv, bis dahin ist die Rechenzeit ohne und mit neuer Optimierung gleich.

Die gesamte Simulationszeit betrug 2000s. Es wurden zwei verschiedene Längen für den Stellhorizont nc und den Prädiktionshorizont np, jeweils angegeben in Abtastschritten, getestet.

| Algorithmus | nc | np | Anzahl gemittelter Simulationen | gemittelte Simulationszeit in s |
|---|---|---|---|---|
| MPC ohne Optimierung | 30 | 60 | 10 | 0.7875 |
| MPC mit Optimierung: Stellhorizont | 30 | 60 | 10 | 11.3833 |
| MPC mit Optimierung: Dyn. Problemreduktion + Stellhorizont | 30 | 60 | 10 | 4.117 |
| MPC ohne Optimierung | 50 | 100 | 10 | 0.9056 |
| MPC mit Optimierung: Stellhorizont | 50 | 100 | 10 | 21.0009 |
| MPC mit Optimierung: Dyn. P.red. + Stellhorizont | 50 | 100 | 10 | 6.6566 |

Für eine weitere Simulation wurde ein 10x10 System herangezogen. Bei einer Simulationszeit von 1100s lag das System ab ca. 200-300s in der Begrenzung.

| Algorithmus | nc | np | Anzahl gemittelter Simulationen | gemittelte Simulationszeit in s |
|---|---|---|---|---|
| MPC ohne Optimierung | 20 | 91 | 10 | 9.8415 |
| MPC mit Optimierung: Stellhorizont | 20 | 91 | 10 | 167.2858 |
| MPC mit Optimierung: Dyn. P.red. + Stellhorizont | 20 | 91 | 10 | 49.6407 |

Es ist zu erkennen, dass durch die Reduktion der Komplexität des linearen Optimierungsproblems zusätzlich noch mehr als die Hälfte an Rechenzeit gegenüber der erfindungsgemäßen LP-Lösung des QP-Problems eingespart werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

10 Prädiktivregler

11 erstes Mittel

12 zweites Mittel

13 drittes Mittel

$\Omega$     Matrix zur Zuordnung der Stellgrößenänderungen zu ihren Grenzen

$\Delta u$     Vektor der Stellgrößenänderungen zu verschiedenen Zeitpunkten innerhalb des Steuerhorizontes

$\Theta$     Vektor der Grenzen der verschiedenen Stellgrößenänderungen zu verschiedenen Zeitpunkten

$\lambda$     Vektor zur Angabe der Abstände der einzelnen Stellgrößenänderungen zu ihren Grenzen für verschiedene Zeitpunkte

$\nu$     Vektor zur Angabe der aktiven unteren Grenzen der verschiedenen Stellgrößenänderungen zu verschiedenen Zeitpunkten

$\rho$     Vektor zur Angabe der aktiven oberen Grenzen der verschiedenen Stellgrößenänderungen zu verschiedenen Zeitpunkten

e     ein mit Einsen gefüllter Vektor

*M*     Schur-Komplement der Block-Elimination

*q*     verbleibender Term der Block-Elimination, welcher nicht im Schur-Komplement M enthalten ist

$z_0$     Fehler des linearen Optimierungsproblems

*g*     lineare Abhängigkeiten von den Stellgrößen im Optimierungsproblem

*H*     Hesse-Matrix des Optimierungsproblems

*I*     Einheitsmatrix

*lb*     lower bounds für die verschiedenen Stellgrößen

*N*     Matrix des neuen Optimierungsproblems, welche $\lambda$ gewichtet

*r*     Index beim Simplex-Verfahren zur Kennzeichnung des Pivotelements

*s*     Index beim Simplex-Verfahren zur Kennzeichnung des Pivotelements

*ub*     upper bounds für die verschiedenen Stellgrößen

Literaturverzeichnis

[1] Maciejowski, J.M.: Predictive Control with Constraints. Pearson Education Limited, 2002

[2] Wojsznis, W., Blevins, T., Wojsznis, P., Metha, A., "Extending LP Optimizer Functionality for Model Predictive Control", Proceedings for 44th IEEE Conference on Decision and Control, 2005

[3] Wojsznis, W., Thiele, D., Wojsznis, P., Metha, A., "Integration of Real Time Process Optimizer with a Model Predictive Function Block", 2002

[4] Wojsznis, W., Blevins, T., Nixon, M., Wojsznis, P., "Infeasibility Handling in MPC with Prioritized Constraints", 2003

[5] Wojsznis, W., Blevins, T., Nixon: Integrated Model Predictive Control and Optimization within a Process Control System; US 7,376,472 B2

[6] Loyd, S., Vandenberghe, L., "Convex Optimization", Cambridge University Press, 2004

[7] Krabs, W., "Einführung in die lineare und nichtlineare Optimierung für Ingenieure", Teubner Verlag, 1983

[8] Wang, Y., Boyd, S., "Fast Model Predictive Control using Online Optimization", IEEE Transactions on Control Systems Technology, 2010

[9] Schierenbeck, H., "Grundzüge der Betriebswirtschaftslehre", Oldenbourg Verlag, 1287

[10] Whitepaper "Wie verbessern Sie die Performance Ihrer Anlage mit Hilfe der passenden Funktionen aus dem SIMATIC PCS7 APC-Portfolio?", Oktober 2008

[11] Wojsznis, W., Blevins, T., Nixon, M., Wojsznis, P., "Constraint and limit feasibility handling in a process control system optimizer"; US 7,337,022 B2

[12] Mehta, A., Wojzsnis, P., Wojsznis, W., Blevins, T., Thiele, D., Ottenbacher, R., Nixon, M., "Integrated model predictive control and optimization within a process control system"; US 7,050,863 B2

**Patentansprüche**

1. Modellbasierter Prädiktivregler (10) zur Regelung eines technischen Prozesses mittels eines Modells für das dynamische Verhalten des Prozesses mit einer Mehrzahl von Stellgrößen und einer Mehrzahl von Regelgrößen, mit:

   a) einem ersten Mittel (11) zur Bereitstellung eines quadratischen Optimierungsproblems für Stellgrößenänderungen in Form eines quadratischen Gütekriteriums und der zugehörigen Nebenbedingungen in Form einer Ungleichheitsbedingung zwischen einem Produkt aus einer Matrix ($\Omega$) zur Zuordnung der Stellgrößenänderungen zu ihren Grenzen und aus einem Vektor ($\Delta u$) der Stellgrößenänderungen zu verschiedenen Zeitpunkten innerhalb eines vorbestimmten Steuerhorizontes und einem Vektor ($\Theta$) der Grenzen der verschiedenen Stellgrößenänderungen zu den verschiedenen Zeitpunkten; und
   b) einem zweiten Mittel (12) zur Umwandlung des quadratischen Optimierungsproblems und der zugehörigen Nebenbedingungen in ein lineares Optimierungsproblem mittels zumindest dreier Vektoren ($\lambda$, $\nu$, $\rho$) quasikomplementärer Faktoren, aufweisend einen ersten Vektor ($\lambda$) zur Angabe der Abstände der einzelnen Stellgrößenänderungen zu ihren Grenzen für verschiedene Zeitpunkte des Steuerhorizontes, einen zweiten Vektor ($\nu$) zur Angabe der aktiven unteren Grenzen der verschiedenen Stellgrößenänderungen für die verschiedenen Zeitpunkte und einen dritten Vektor (p) zur Angabe der aktiven oberen Grenzen der einzelnen Stellgrößenänderungen für die verschiedenen Zeitpunkte.

2. Prädiktivregler nach Anspruch 1,
   **dadurch gekennzeichnet,**
   **dass** das erste Mittel (11) die Ungleichheitsbedingung als $\Omega\Delta u \geq \Theta$ bereitstellt, wobei $\Omega$ die Matrix zur Zuordnung der Stellgrößenänderungen zu ihren Grenzen bezeichnet, $\Delta u$ den Vektor der Stellgrößenänderungen zu verschiedenen Zeitpunkten innerhalb des Steuerhorizontes bezeichnet und $\Theta$ den Vektor der Grenzen der verschiedenen Stellgrößenänderungen zu den verschiedenen Zeitpunkten bezeichnet.

3. Prädiktivregler nach Anspruch 2,
   **dadurch gekennzeichnet,**
   **dass** das zweite Mittel (12) die Ungleichheitsbedingungen $\Omega\Delta u \geq \Theta$ und das quadratische Optimierungsproblem mittels einer Block-Elimination und unter Verwendung der drei Vektoren ($\lambda$, $\nu$, $\rho$) quasi-komplementärer Faktoren in

$$\lambda = M \begin{bmatrix} \nu \\ \rho \end{bmatrix} + e z_0 + q \quad , \text{ mit } \nu \geq 0,\ \lambda \geq 0,\ \rho \geq 0 \text{ und den Bedingungen } \nu^T\lambda = 0,\ \rho^T\lambda = 0, \text{ mit } \nu_i \neq \lambda_i,\ \rho_i \neq \lambda_i, \text{ und}$$

$\nu^T\rho = 0$, umwandelt, wobei M das Schur-Komplement der Block-Elimination bezeichnet, e einen mit Einsen gefüllten Vektor bezeichnet, $z_0$ den zu minimierenden Fehler des linearen Optimierungsproblems bezeichnet und q den verbleibenden Term der Block-Elimination bezeichnet, der nicht im Schur-Komplement M enthalten ist.

4. Prädiktivregler nach Anspruch 3,
   **dadurch gekennzeichnet,**
   **dass** das zweite Mittel (12) dazu eingerichtet ist, das Schur-Komplement M aus viermal derselben Matrix M1 zu-

sammenzusetzen, mit $M = \begin{bmatrix} M1 & -M1 \\ -M1 & M1 \end{bmatrix}$.

5. Prädiktivregler nach Anspruch 3 oder 4,
   **dadurch gekennzeichnet,**
   **dass** ein drittes Mittel (13) vorgesehen ist, welches dazu eingerichtet ist, das lineare Optimierungsproblem

   $\lambda = M \begin{bmatrix} v \\ \rho \end{bmatrix} + ez_0 + q$ mittels eines modifizierten Simplex-Verfahrens zu lösen.

6. Prädiktivregler nach Anspruch 5,
   **dadurch gekennzeichnet,**

   **dass** das dritte Mittel (13) dazu eingerichtet ist, für das lineare Optimierungsproblem $\lambda = M \begin{bmatrix} v \\ \rho \end{bmatrix} + ez_0 + q$

   einen Ansatz $N\lambda - Mv + M\rho + ez_0 = q$ zu treffen, wobei N eine Gewichtungsmatrix für $\lambda$ bezeichnet, und $z_0$ des getroffen Ansatzes zur Lösung des linearen Optimierungsproblems zu minimieren.

7. Prädiktivregler nach Anspruch 6,
   **dadurch gekennzeichnet,**
   **dass** das dritte Mittel (13) dazu eingerichtet ist, $z_0$ des getroffenen Ansatzes mittels des modifizierten Simplex-Verfahrens auf Null zu bringen.

8. Prädiktivregler nach Anspruch 6 oder 7,
   **dadurch gekennzeichnet,**

   **dass** das dritte Mittel (13) dazu eingerichtet ist, zur Lösung des Ansatzes mit $M = \begin{bmatrix} M1 & -M1 \\ -M1 & M1 \end{bmatrix}$ als Startparameter alle $\lambda$ als Basisvariablen zu wählen.

9. Prädiktivregler nach einem der Ansprüche 4 bis 8,
   **dadurch gekennzeichnet,**
   **dass** das dritte Mittel (13) dazu eingerichtet ist, die Komplexität des Ansatzes durch Entfernen aller Zeitpunkte ohne aktive Grenzen mit $v \neq 0$ und $\rho \neq 0$ zu reduzieren.

10. Prädiktivregler nach Anspruch 9,
    **dadurch gekennzeichnet,**
    **dass** das dritte Mittel (13) dazu eingerichtet ist, die neuen q-Werte des reduzierten Ansatzes durch

    $q(k+1) = q(k) + \begin{bmatrix} Mv - M\rho \\ -Mv + M\rho \end{bmatrix}$

    zu berechnen.

11. Speicherprogrammierbare Steuerung mit einem modellbasierten Prädiktivregler (10) nach einem der Ansprüche 1 bis 10.

12. Verfahren zur Regelung eines technischen Prozesses mittels eines Modells für das dynamische Verhalten des Prozesses mit einer Mehrzahl von Stellgrößen und einer Mehrzahl von Regelgrößen, mit den Schritten:

    a) Bereitstellen eines quadratischen Optimierungsproblems für Stellgrößenänderungen in Form eines quadratischen Gütekriteriums und der zugehörigen Nebenbedingungen in Form einer Ungleichheitsbedingung zwischen einem Produkt aus einer Matrix $\Omega$ zur Zuordnung der Stellgrößenänderungen zu ihren Grenzen und aus einem Vektor $\Delta u$ der Stellgrößenänderungen zu verschiedenen Zeitpunkten innerhalb eines vorbestimmten Steuerhorizontes und einem Vektor $\Theta$ der Grenzen der verschiedenen Stellgrößenänderungen zu den verschiedenen Zeitpunkten; und

b) Umwandeln des quadratischen Optimierungsproblems und der zugehörigen Nebenbedingungen in ein lineares Optimierungsproblem mittels zumindest dreier Vektoren ($\lambda$, $\nu$, $\rho$) quasi-komplementärer Faktoren, aufweisend einen ersten Vektor ($\lambda$) zur Angabe der Abstände der einzelnen Stellgrößenänderungen zu ihren Grenzen für verschiedene Zeitpunkte des Steuerhorizontes, einen zweiten Vektor ($\nu$) zur Angabe der aktiven unteren Grenzen der verschiedenen Stellgrößenänderungen für die verschiedenen Zeitpunkte und einen dritten Vektor (p) zur Angabe der aktiven oberen Grenzen der einzelnen Stellgrößenänderungen für die verschiedenen Zeitpunkte.

13. Verfahren nach Anspruch 12,
**dadurch gekennzeichnet,**
**dass** das lineare Optimierungsproblem mittels eines modifizierten Simplex-Verfahrens gelöst ist.

14. Computerprogramm-Produkt, welches auf einer programmgesteuerten Einrichtung die Durchführung eines Verfahrens nach Anspruch 12 oder 13 veranlasst.

15. Datenträger mit einem gespeicherten Computerprogramm mit Befehlen, welche die Durchführung eines Verfahrens nach Anspruch 12 oder 13 auf einer programmgesteuerten Einrichtung veranlassen.

# FIG 1

# FIG 2

FIG 3

FIG 4

## FIG 5

## FIG 6

## FIG 7

FIG 8

FIG 9

# FIG 10

# FIG 11

## FIG 12

## FIG 13

## FIG 14

## FIG 15

**Europäisches Patentamt**
**European Patent Office**
**Office européen des brevets**

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 11 19 5037

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | EP 1 591 847 A1 (ABB RESEARCH LTD [CH]) 2. November 2005 (2005-11-02) * Absatz [0002] - Absatz [0003] * * Absatz [0016] * ----- | 1,11-14 | INV. G05B13/04 |
| A | EP 2 107 439 A1 (HONEYWELL INT INC [US]) 7. Oktober 2009 (2009-10-07) * Absatz [0016] - Absatz [0018] * ----- | 1 | |

**RECHERCHIERTE SACHGEBIETE (IPC)**

G05B

### UNVOLLSTÄNDIGE RECHERCHE

Die Recherchenabteilung ist der Auffassung, daß ein oder mehrere Ansprüche, den Vorschriften des EPÜ
nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| Den Haag | 29. Mai 2012 | Kelperis, K |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
Dokument

EPO FORM 1503 03.82 (P04E09)

Europäisches
Patentamt

European
Patent Office

Office européen
des brevets

**UNVOLLSTÄNDIGE RECHERCHE
ERGÄNZUNGSBLATT C**

**Nummer der Anmeldung**

EP 11 19 5037

Unvollständig recherchierte Ansprüche:
      1-15

Grund für die Beschränkung der Recherche (nicht patentfähige
Erfindung(en)):

Ansprüche 1-15 beziehen sich teilweise aus mathematische
Methoden.(Artikel 52 (2) a) EPÜ ) und sind in ihrem vollen Umfang nicht
patentierbar. Daher wurde keine vollständige Recherche durchgeführt. Die
Recherche beschränkte sich auf den Teil der Ansprüche  der sich nicht auf
mathematische   Methoden bezieht .

**ANHANG ZUM EUROPÄISCHEN RECHERCHENBERICHT**
**ÜBER DIE EUROPÄISCHE PATENTANMELDUNG NR.**

EP 11 19 5037

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2012

| Im Recherchenbericht angeführtes Patentdokument | Datum der Veröffentlichung | Mitglied(er) der Patentfamilie | Datum der Veröffentlichung |
|---|---|---|---|
| EP 1591847 A1 | 02-11-2005 | AT 375533 T | 15-10-2007 |
| | | CN 1947074 A | 11-04-2007 |
| | | DE 602005002839 T2 | 08-05-2008 |
| | | EP 1591847 A1 | 02-11-2005 |
| | | EP 1743223 A1 | 17-01-2007 |
| | | JP 2007535046 A | 29-11-2007 |
| | | KR 20070004912 A | 09-01-2007 |
| | | US 2007088447 A1 | 19-04-2007 |
| | | WO 2005103847 A1 | 03-11-2005 |
| EP 2107439 A1 | 07-10-2009 | EP 2107439 A1 | 07-10-2009 |
| | | US 2009254202 A1 | 08-10-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7376472 B2
- US 7337022 B2
- US 7050863 B2


**In der Beschreibung aufgeführte Nicht-Patentliteratur**

- **MACIEJOWSKI, J.M.** Predictive Control with Constraints. Pearson Education Limited, 2002
- **WOJSZNIS, W. ; BLEVINS, T. ; WOJSZNIS, P. ; METHA, A.** Extending LP Optimizer Functionality for Model Predictive Control. *Proceedings for 44th IEEE Conference on Decision and Control,* 2005
- **WOJSZNIS, W. ; THIELE, D. ; WOJSZNIS, P. ; METHA, A.** *Integration of Real Time Process Optimizer with a Model Predictive Function Block,* 2002
- **WOJSZNIS, W. ; BLEVINS, T. ; NIXON, M. ; WOJSZNIS, P.** *Infeasibility Handling in MPC with Prioritized Constraints,* 2003
- **LOYD, S. ; VANDENBERGHE, L.** Convex Optimization. Cambridge University Press, 2004
- **KRABS, W.** Einführung in die lineare und nichtlineare Optimierung für Ingenieure. Teubner Verlag, 1983
- **WANG, Y. ; BOYD, S.** Fast Model Predictive Control using Online Optimization. *IEEE Transactions on Control Systems Technology,* 2010
- *Wie verbessern Sie die Performance Ihrer Anlage mit Hilfe der passenden Funktionen aus dem SIMATIC PCS7 APC-Portfolio?,* Oktober 2008